# EUROPEAN PATENT SPECIFICATION

(11) **EP 2 083 117 B1**
(45) Date of publication and mention of the grant of the patent: **13.03.2013**
(21) Application number: 08150320.3
(22) Date of filing: 16.01.2008
(51) Int. Cl.: D21C 9/08, D21H 17/68, D21C 3/22, C01B 33/24

(54) **Silica composition**
Kieselsäurezusammensetzung
Composition de silice

(43) Date of publication of application: 29.07.2009
(73) Proprietor: BIM KEMI AB, S-443 03 Stenkullen (SE)
(72) Inventor: Wassenius, Helena, 243 63 Torslanda (SE); Wållberg, Peter, 443 32 Lerum (SE); Hassler, Thord, 252 20 Helsingborg (SE); Kittelsen, Tom, 3016 Drammen (NO)
(74) Representative: Zakrisson, Ulrika

(56) References cited:
- EP-A- 0 517 453
- EP-A- 0 959 175
- WO-A-01/40576
- WO-A-93/22386
- US-A- 2 888 377
- US-A- 3 264 130
- US-A- 4 830 843
- US-A- 5 254 286
- US-B1- 6 406 594
- DATABASE WPI Week 199414 Thomson Scientific, London, GB; AN 1994-115673 XP002484822 & JP 06 065892 A (MIZUSAWA CHEM IND CO LTD) 8 March 1994 (1994-03-08)

## Description

### Field of the invention

The invention relates to the field of chemical processes for treating cellulosic fibres, in particular wood pulp.

### Background of the invention

Even though paper has been made for several hundred years, the pulp and paper industry is continually developing. Being a user of a natural renewable raw material, the industry is today striving to develop its image in the public mind as an environmentally acceptable industry. To sustain its business over time, the pulp and paper industry must also develop the quality of paper and board, which will, in turn, depend on the development of the quality of the fibre from which the paper and/or board is made.

A critical aspect of maintaining an environmentally friendly image is the ability of the industry to continue to reduce its effluent. Today the reuse of water in the pulp and paper industry is to a large extent limited by accumulation of substances in the recycled water. Any development that allows further reduction in water consumption and a corresponding reduction in effluent load is regarded as positive.

Wood fibres for use in papermaking are manufactured either by a chemical pulping process or a mechanical process or a combination of the two. Recycled fibres consitute a considerable part of the wood fibres used. In the processing of wood for preparing pulp suitable for paper and board production, the intermediate material is often contacted with an oxidsing substance. One example of such a process is oxygen delignification, and another example is bleaching of pulp. Regardless of process or fibre source, the fibres are often too dark to be suitable for certain paper qualities. Hence, the fibres are bleached by contact with a bleaching agent. Public demand is driving the market towards higher and higher brightness, since a whiter sheet of paper is generally perceived to be of higher quality than a darker sheet.

Brightness can be measured in a number of ways. The generally accepted way to quantify brightness of wood fibres is by using the ISO brightness standard method. By this method, the brightness is defined on a scale of 0 % to 100 %, where 0 % represents a perfectly black body and 100 % represents the brightness of a standard magnesium oxide crystal. Unbleached wood fibres typically have an ISO brightness of 58-62 %. This value can be considerably increased by contacting the fibres with a bleaching agent, which is either an oxidising or a reducing substance. It is also possible to bleach fibres in a series of consecutive bleaching steps by using one or more bleaching agents to achieve high brightness. The bleaching result may depend on the type of wood fibres used.

Prior art discloses chlorine as one commonly used bleaching agent for wood fibres. However, bleaching with chlorine has the disadvantage that harmful organic compounds are formed. Thus, driven by an environmental concern and an ambition to be perceived as an environmentally sound industry, other solutions for bleaching wood fibres have been developed by pulp and paper manufacturers, and bleaching with elemental chlorine is today at large discontinued.

One commonly used oxidising substance for bleaching wood fibres is hydrogen peroxide. This substance has considerable advantages as a bleaching agent, as it is relatively effective, relatively inexpensive and does not contain chlorine. Hydrogen peroxide based bleaching is conventionally performed at an alkaline pH in the presence of a silicate, such as sodium silicate commonly referred to as water glass.

It is known that hydrogen peroxide is degraded through catalytic activity of manganese and iron. Such degradation of hydrogen peroxide decreases the amount of peroxide available for the bleaching reaction and thus reduces the efficiency of the bleaching process. Therefore, heavy metal ions such as iron and manganese present in the pulp are conventionally removed by contacting the pulp with a chelating agent and removing the water including the chelated heavy metals. Alternatively the chelating agent is present in the hydrogen peroxide based bleaching process. The most commonly used chelating agents are ethylene diamine tetra acetic acid (EDTA) and diethylene triamine penta acetic acid (DTPA) or salts thereof. However, these agents are very difficult to degrade in biological processes and they have a potential to accumulate in the environment because of their low biodegradability. To avoid this accumulation, other strong chelates have been developed, such as [S,S]ethylene diamine disuccinic acid, see WO 97/30209. However, the cost of such products being substantially higher, they are not used industrially. Also, despite these efforts to minimise the degradation of hydrogen peroxide, considerable loss of peroxide by degradation may still occur.

Water glass is an alkaline solution of high pH (often about 12-13) consisting mainly of silicate monomers of the chemical formula (SiO₂)ₓ:Na₂O, in which x usually is below 3.5. The function of the sodium silicate is not fully understood, but it is believed to participate in the chelation of heavy metals and to contribute to establishing the alkaline conditions required for a good bleach result. Further, sodium silicate is believed to passivate metal surfaces. However, it has been reported that sodium silicate has the disadvantages of having a tendency to scale and of being abrasive in refiners. Furthermore, sodium silicate reduces the drainage on the paper machine, and hence reduces the production rate and/or increases the drying cost.

Conventionally, sodium hydroxide is used to provide an alkaline environment, which is required for effective bleaching with hydrogen peroxide. Sodium hydroxide, although effective to create alkaline conditions, has a disadvantage in that the pH of the bleaching process generally becomes too high for an optimal result. At the high pH obtained using sodium hydroxide some of the wood fibres are dissolved, resulting in a fibre loss of 1-2 % or more, as evidenced by a high chemical oxygen demand (COD). This means not only a loss in yield but also an increase in effluent problems, since the dissolved fibres contribute to the organic load of the effluent stream. The fibre stream will also contain a higher quantity of dissolved organic material that may interfere with retention and dewatering on the paper machine for mills that have an integrated pulp and paper production. In order to reduce pH, other materials, such as calcium oxide, magnesium sulphate, magnesium oxide and magnesium hydroxide, have been tested to partially replace sodium hydroxide as an alkaline agent. However, the brightness achieved using magnesium hydroxide tends to be a few ISO units lower than what is achievable using sodium hydroxide to regulate pH, thus resulting in a paper which is perceived as being of inferior quality.

A further disadvantage of both the conventional process using sodium hydroxide and the more experimental process using magnesium hydroxide is that strong chelating agents must be used in order to minimise degradation of oxidising bleaching agents or other lignin reactive agents.

Furthermore, sodium silicate is used in the deinking of recycled fibres. The purpose of deinking is, similarly to bleaching, to increase the brightness of the pulp. However, as opposed to the bleaching of virgin wood fibres, the increase in brightness in the deinking process is achieved by the separation of dyes from wood fibres typically originating from recycled paper. This can be done with or without the use of an oxidising substance. Conventionally in the deinking process, the silicate is combined with sodium hydroxide, an oxidising substance and a surfactant. The deinking is performed at high pH in order to ensure sufficient swelling of the fibres. It has been shown that this operation can also be performed at a lower pH using magnesium hydroxide as the alkali source. The magnesium hydroxide based deinking process is however still experimental and is not common practice.

The pulp and paper industry increasingly close their systems by recycling water to minimise effluents and to some extent preserve energy. A consequence of this is the accumulation of substances with low fibre affinity, for example oxalate ions formed by degradation of cellulose. Another substance with low fibre affinity is calcium ion. Accumulation of both these substances may lead to deposition of precipitated calcium oxalate, which is a problem of increasing significance in the pulp and paper industry.

Furthermore, as in all large scale industrial applications, cost is a significant factor to consider in the pulp and paper industry. Not only the sum of the individual costs of chemical additives used in the process step, but indeed any reduction in the overall cost for pulp processing would consitute an improvement.

WO 93/22386 discloses a process of preparing non-agglomerated silica coated water insoluble particles using a dispersion aid. The process i particularly useful for the preparation of titanium dioxide pigments e.g. for paints.

US 6,406,594 relates to composite products having mineral networks polymerized about cellulosic material, and in particular discloses (Example 6) formation of an aqueous mixture of magnesium oxide and sodium silicate, to which aluminum sulfate is added. The mixture is subsequently carbonated before it is added to a pulp blend.

In conclusion, there is clearly a need for a process by which the brightness of currently used pulp treatment processes may be achieved without some or all of the above disadvantages, i.e., loss of oxidising agent, significant fibre loss, high organic load of effluent water, low biodegradability of additives, silicate and oxalate scaling, and which has a potential for cost reduction. There is also clearly a need for a process whereby further closure of water systems can be achieved.

### Summary of the invention

It is an object of the invention to at least partly overcome the problems associated with the prior art processes described above and thus to provide means for achieving an improved treatment result, and in particular an improved bleaching process.

It is a further object of the invention to provide a process which enables further recycling of process water.

In a first aspect the invention relates to a method for producing a composition comprising a mixture of a silica compound and an alkaline earth metal oxide or alkaline earth metal hydroxide in an aqueous solvent, comprising the steps of:
- adding an alkaline earth metal oxide or alkaline earth metal hydroxide and a silica compound selected from the group consisting of colloidal silica and a silicate which is alkali metal silicate or ammonium silicate, to an aqueous medium to form an aqueous mixture, wherein the silica compound and the alkaline earth metal oxide or alkaline earth metal hydroxide together form the major part of the non-solvent matter of the composition; and
- allowing said aqueous mixture to stand by maintaining the mixture in a sealed or open vessel, with or without agitation, for at least 24 hours at ambient temperature, during which time period the composition is not contacted with any other chemicals.

Also provided is a composition comprising a mixture of a silica compound and an alkaline earth metal oxide or alkaline earth metal hydroxide in an aqueous solvent, characterised in that the silica compound and the alkaline earth metal oxide or alkaline earth metal hydroxide together form the major part of the non-solvent matter of the composition.

By pre-formulating the alkaline earth metal oxide or alkaline earth metal hydroxide and the silica compound in a separate composition for subsequent addition to a fibre material to be treated with a treatment agent, the efficiency of the treatment is improved compared to the case when an alkaline earth metal oxide or alkaline earth metal hydroxide and a silica compound are added sequentially to a fibre material, or only mixed during or shortly before addition. Hence, for example, smaller amounts of bleaching agent and/or silica compound can be used to achieve a certain ISO brightness. Also, unconsumed hydrogen peroxide remaining after a first bleaching reaction (also known as residual peroxide) can be recycled, thus allowing a corresponding saving in the amount of subsequently added hydrogen peroxide when the object is to achieve a certain concentration of hydrogen peroxide over time.

Furthermore, by providing a composition comprising both the alkaline earth metal oxide or alkaline earth metal hydroxide and the silica compound to the pulp and/or paper production facility, the invention greatly facilitates the handling of these additives and the addition process.

The composition may have a content of said alkaline earth metal oxide or alkaline earth metal hydroxide in the range of from 1 to 99 %, preferably 10 to 90 %, more preferably 30 to 80 % and most preferably 40 to 70 % by dry weight. Furthermore, the composition may have a content of said silica compound in the range of from 1 to 80 %, preferably 5 to 50 % by dry weight.

The composition according to the invention may also have a dry weight ratio of said silica compound to said alkaline earth metal oxide or alkaline earth metal hydroxide in the range of from 1:99 to 80:20, preferably from 5:95 to 50:50, and more preferably from 20:80 to 40:60, the silica compound and the alkaline earth metal oxide or alkaline earth metal hydroxide together forming the major part of the non-solvent matter of the composition. At a ratio higher than 50:50, when the composition is used in a peroxide bleaching or an oxygen delignification process, a decrease in brightness may be experienced due to the effect of a process known as alkali darkening. Therefore, compositions having a content of silica compound corresponding to a ratio of 50:50 or lower are preferred. By "the major part of the non-solvent matter" is meant at least 50 %, for example at least 70 %, by total weight of the non-solvent matter.

The alkaline earth metal is preferably magnesium. Being sparingly soluble in water, magnesium hydroxide, in particular Mg(OH)₂, provides a moderately alkaline pH which is advantageous for e.g. bleaching processes using hydrogen peroxide as the peroxide consumption rate is moderated compared to that of a process in which sodium hydroxide is used as the alkali source, resulting in a higher residual peroxide and reduced fibre loss. By formulating the magnesium hydroxide with a silica compound in a composition according to the invention, an even more improved bleaching efficiency and bleaching effect may be obtained compared to that obtained by separate addition of the magnesium hydroxide and silica compound. A further advantage of using magnesium hydroxide in combination with a silica compound according to the present invention is that the problems associated with the formation of silicate scale and oxalate scale, respectively, are substantially avoided. As a result, the need for costly production stops for cleaning of machine parts is decreased. Also, the invention allows for increased recycling of process water, thus saving energy and reducing effluent.

The silica compound may be selected from the group consisting of colloidal silica and silicate, and combinations thereof.

Advantageously, colloidal silica is used in the composition according to the invention. The colloidal silica is believed to bind dissolved iron and manganese ions present in the composition while avoiding the formation of scale traditionally associated with the use of water glass, although other reasons for the improved efficiency cannot be excluded. Colloidal silica is readily mixed with the magnesium hydroxide to provide a stable composition. The colloidal silica typically has a particle size in the range of from 1 to 500 nm. Moreover, as colloidal silica has a pH which is lower than that of sodium silicate, the preparation and handling of the composition is rendered safer and simpler using colloidal silica.

Further, the colloidal silica may comprise surface modifications. By introducing modifications on the surface of the colloidal silica particle, e.g. by introduction of organic side chains, such as alkyl groups and/or derivatives thereof, the stability of the composition may be improved due to steric shielding which may reduce the destabilising effect of electrostatic forces acting on the silica particles in the composition.

Alternatively, the silica compound may be silicate, preferably alkali metal silicate, and more preferably sodium silicate. Sodium silicate crystals in a composition of the invention appear to readily bind dissolved iron and manganese ions present in the composition, although other reasons for the improved efficiency cannot be excluded. Furthermore, using a composition comprising magnesium oxide or hydroxide and sodium silicate, the problem of silicate scale formation is reduced as, instead of sodium silicate, talk-like magnesium silicate is formed as the main silicate salt. As opposed to sodium silicate, precipitated magesium silicate is easily removed by washing and does not have a tendency to scale.The sodium silicate preferably has a SiO₂:Na₂O ratio in the range of from 1 to 4.5, more preferably from 1 to 3.5.

A further advantage of using a combination of magnesium hydroxide and a silica compound, in particular a silicate, versus using only magnesium hydroxide is that the composition can be optimised with regard to total cost while achieving a desired technical effect.

In another aspect, the invention relates to the use of a composition as described above for treating cellulosic fibres. The invention also relates to the use of the above composition for reducing oxalate scale formation in a pulp and/or paper making system.

In another aspect, the invention relates to a composition obtainable by the above-described method.

In yet another aspect, the invention relates to a method for producing a treatment mixture, comprising the steps of:
- providing a composition as described above, or a composition produced by the above method; and
- contacting said composition with a treatment agent.

The treatment agent may be a lignin reactive agent, a bleaching agent or a deinking agent. When the treatment agent is a bleaching agent, the method for treating cellulosic fibres may be a bleaching method. An example of a bleaching agent is hydrogen peroxide. Furthermore, when the treatment agent is a lignin reactive agent, the method for treating cellulosic fibres may be a method for delignification of wood fibres. An example of a lignin reactive agent is oxygen. When the treatment agent is a deinking agent, the method may be a process for deinking recycled pulp.

In a further aspect, the invention relates to a method for treating cellulosic fibres comprising the steps of:
- providing a fibre material; and
- adding a composition as described above, or a composition produced by the method described above, to said fibre material.

The method for treating cellulosic fibres further comprises the step of adding a treatment agent to said fibre material. The step of adding the composition may advantageously be performed before the step of adding the treatment agent. The fibre material to be treated may be wood pulp such as chemical wood pulp, semi-chemical wood pulp, and mechanical wood pulp; recycled fibres; or wood chips.

Additionally, in a further aspect, the invention relates to a method for reducing the formation of oxalate scale in a pulp and/or paper making system, which method comprises the step of adding the composition of the invention to said pulp and/or paper making system.

Finally, the invention also relates to a method for producing a paper article comprising the steps of:
- performing a method for treating cellulosic fibres as described above; and
- forming a paper article from said cellulosic fibres.

The invention will be described in more detail below.

### Detailed description of the invention

The present inventors have surprisingly found that an aqueous composition comprising a mixture of an alkaline earth metal oxide or alkaline earth metal hydroxide, in particular magnesium hydroxide, with a silica compund, e.g. colloidal silica or sodium silicate, wherein the silica compound and the alkaline earth metal oxide or alkaline earth metal hydroxide together form the major part of the non-solvent matter, provides superior effects compared to separate addition of the above ingredients to a fibre material when used in a process for peroxide-assisted bleaching of cellulosic fibres. These effects relate in particular to the residual peroxide content and silica utilization. Furthermore, importantly, these effects may be obtained essentially without a reduced bleaching effect as determined by ISO brightness. In particular, the inventors have found that by mixing an alkaline earth metal oxide or alkaline earth metal hydroxide and a silica compound in an aqueous medium and allowing the resulting mixture to stand before being used in a bleaching process, an improved bleaching efficiency can be achieved.

Typically, the composition comprises water as a solvent.

A preferred alkaline earth metal oxide or alkaline earth metal hydroxide according to the invention is magnesium hydroxide, in particular Mg(OH)₂. Mg(OH)₂ has low solubility in water (12 mg/l at 25 °C at equilibrium pH) and is typically provided as an aqueous dispersion. When added to an aqueous system, magnesium hydroxide slowly dissolves to form magnesium ions, Mg²⁺, and hydroxide ions, OH⁻, of which the latter may contribute to the activation of an oxidising treatment agent (e.g., oxygen or hydrogen peroxide).

The general formula representing the chemical reaction between hydrogen peroxide and hydroxide ions is as follows:

H₂O₂ + OH⁻ → OOH⁻ + H₂O (I)

The perhydroxy anion formed by reaction (I) reacts further to provide a bleaching effect. Because of the low solubility of magnesium hydroxide, hydroxide ions are provided at a slow rate, thus moderating the rate of hydrogen peroxide conversion to perhydroxy anions. Such a moderated reaction rate favours the efficiency of the reaction, resulting in considerably increased residual hydrogen peroxide and reduced fibre loss.

As an alternative to magnesium hydroxide, magnesium oxide (MgO) may also be used for the purpose of the invention. Magnesium oxide is conventionally used for the preparation of magnesium hydroxide by reaction with water at elevated temperature. In order for the magnesium of magnesium oxide to be soluble in water, hydration to magnesium hydroxide is generally required. According to the invention, this hydration may occur *in situ* in the composition, and magnesium oxide may thus be used instead of, or in combination with, magnesium hydroxide as a starting material.

Commercial magnesium hydroxide generally contains relatively high amounts of manganese and iron in comparison to commercial sodium hydroxide. Therefore, the requirement for a chelating agent should be particularly strong in a process using magnesium hydroxide instead of sodium hydroxide to provide alkaline conditions. The inventors have surprisingly found that the use of a pre-formulated composition comprising a mixture of a silica compound and magnesium oxide or hydroxide in an aqueous solvent, the magnesium oxide or hydroxide and the silica compound together forming the major part of the non-solvent matter of the composition, allows the use of magnesium hydroxide while retaining or even improving the bleaching efficiency without the use of additional chelating agents in the composition.

By using the composition according to the invention, the drawbacks of scale formation associated with the traditional use of sodium silicate and sodium hydroxide may be reduced or avoided. The use of magnesium oxide or hydroxide according to the invention also reduces the formation of oxalate scale, in particular calcium oxalate, as will be described below. This reduction in oxalate scale will allow for increased reuse of process water and a further reduction in effluent load.

The alkaline earth metal oxide or alkaline earth metal hydroxide according to the invention is preferably commercial magnesium hydroxide (Mg(OH)₂). Commercial magnesium hydroxide typically has an iron content of up to 1500 ppm. The magnesium hydroxide also typically has a manganese content of up to 200 ppm. As an example, a commonly used commercial magnesium hydroxide, CellGuard^{®} OP (Martin Marietta, U.S.A.), has an iron content of <1000 ppm and a manganese content of <120 ppm. Generally, as low iron and manganese contents as possible are preferred.

Since magnesium hydroxide has low water solubility and is provided as an aqueous slurry, the particle size is preferably sufficiently small to avoid sedimentation to an extent that would render the composition according to the invention difficult or impossible to use. Generally, the smaller the particles, the better the storage stability of the composition. Small particles are also desirable since their rate of dissolution will be higher. Perferably, the mean magnesium hydroxide particle size should be about 50 µm or less, and more preferably about 10 µm or less.

The composition according to the invention may have an alkaline earth metal oxide or alkaline earth metal hydroxide content in the range of from 1 to 99 % by dry weight of the composition. Preferably, the alkaline earth metal hydroxide content is in the range of from 10 to 90 %, more preferably 30 to 80 %, and most preferably 40 to 70 % by dry weight of the composition, the alkaline earth metal oxide or alkaline earth metal hydroxide and the silica compound together forming the major part of the non-solvent matter of the composition. Further, the composition may have a dry weight ratio of silica compound to alkaline earth metal oxide or alkaline earth metal hydroxide in the range of from 1:99 to 80:20, preferably in the range of 5:95 to 50:50, and more preferably from 20:80 to 40:60, the alkaline earth metal oxide or alkaline earth metal hydroxide and the silica compound together forming the major part of the non-solvent matter of the composition.

By "the major part of the non-solvent matter" is meant at least 50 % by total weight of the non-solvent matter. Preferably, the alkaline earth metal oxide or alkaline earth metal hydroxide and the silica compound together form at least 70 % by total weight of the non-solvent matter of the composition, for example from about 70 to about 95 % by total weight of the non-solvent matter of the composition.

By "non-solvent matter of the composition" is meant any material present in the composition according to the invention which is not the solvent or the carrier phase for the components of the composition. For example, conventional solvents that, when present in the composition according to the invention, are generally not to be regarded as non-solvent matter include water, glycol and short-chain alcohols. Neither, considering that some of the components of the composition may be present in solid form, e.g. the silica compound and the alkaline earth metal oxide or hydroxide, is a carrier phase such as water to be regarded as non-solvent matter.

Furthermore, the composition comprising an alkaline earth metal oxide or alkaline earth metal hydroxide and a silica compound preferably does not contain a substantial amount of an oxidising agent such as hydrogen peroxide. It is known in the art that iron and manganese are capable of catalysing the degradation of hydrogen peroxide. Without being bound by any particular theory, it is believed that the increased peroxide bleaching efficiency achieved by the invention is dependent on the composition comprising alkaline earth metal oxide or alkaline earth metal hydroxide and silica compound being allowed to stand before it is contacted with a degradation-susceptible treatment agent, such as hydrogen peroxide.

By "allowed to stand" is meant that the composition is maintained for a time period of some duration during which time the composition typically is not contacted with any other chemicals. The composition may be allowed to stand in a sealed or an open vessel, and with or without agitation. Not wishing to be bound by any particular theory, it is believed that, when the mixture is allowed to stand, the silica compound binds detrimental iron and/or manganese initially present in the alkaline earth metal oxide or alkaline earth metal hydroxide. It is also speculated that the silica compound might act as a dispersant and spreading agent for the initially solid alkaline earth metal oxide or alkaline earth metal hydroxide, increasing the rate of dissolution. Further, it is also speculated that nanoscale catalytic effects, still to be elucidated, might occur between the silica compound and the alkaline earth metal oxide or alkaline earth metal hydroxide.

In case the composition according to the invention does contain a treatment agent susceptible of degradation by iron and/or manganese ions, such as hydrogen peroxide, an effective amount of treatment agent is typically added after the mixture of alkaline earth metal oxide or alkaline earth metal hydroxide and silica compound has been allowed to stand. The treatment agent is preferably essentially not degraded before addition to a material to be treated. Thus, when added to the material to be treated, the treatment agent is added in an effective amount, whether or not it is added together with, or separately from, the above composition.

In embodiments of the invention, the composition comprises a minor amount of an oxidising treatment agent. For instance, the composition may comprise up to about 10 % treatment agent, based on dry weight of the composition. Hydrogen peroxide may be present in the composition as an impurity or a contaminant. As described above, an effective amount of treatment agent is typically added after the composition has been allowed to stand.

The silica compound content of the composition according to the invention is typically in the range of from 1 to 80 %, preferably 5 to 50 %, based on dry weight. Moreover, the composition according to the invention may have a dry weight ratio of silica compound to alkaline earth metal hydroxide in the range of from 1:99 to 80:20, preferably in the range of 5:95 to 50:50, and more preferably from 20:80 to 40:60, the alkaline earth metal hydroxide and the silica compound together forming the major part of the non-solvent matter of the composition.

The silica compound may be selected from the group consisting of colloidal silica and silicate and combinations thereof.

In embodiments of the invention, the silica compound of the composition according to the invention is colloidal silica. The colloidal silica for use in the invention is typically provided as polymeric particles dispersed in an aqueous medium, forming an aqueous sol. Colloidal silica is an expensive material and its use in peroxide bleaching processes has to date been poorly investigated. However, the present inventors have found that the use of colloidal silica in the composition of the invention may be advantageous. For example, by using colloidal silica, the formation of silicate scale is substantially avoided. Not wishing to be bound by any particular theory, it is believed that colloidal silica stabilises the bleaching reaction by binding metal ions present in the bleaching solution, such as iron and manganese ions, which would otherwise contribute to the degradation of the bleaching agent. The colloidal silica is also believed to stabilise the pH of the bleaching reaction, thus further moderating the peroxide consumption rate, and hence improve the efficiency of the bleaching reaction. Furthermore, by mixing the colloidal silica and the alkaline earth metal oxide or alkaline earth metal hydroxide to form a composition according to the invention, the efficiency of the bleaching reaction may be improved, and thus it is possible to use a lesser amount of colloidal silica to achive a certain bleaching effect than the amount required when the components are not formulated in a composition which is allowed to stand before use. As a result, the use of colloidal silica is rendered more economically attractive.

The colloidal silica to be used in the invention is typically provided as a sol at a dry content of 30-40 % by weight, and typically has a pH of 8 to 11.

The colloidal silica according to the invention typically comprises particles having an average particle diameter in the range of from about 1 to about 500 nm, preferably from about 1 to about 300 nm, and more preferably from about 1 to about 100 nm.

The colloidal silica according to the invention typically has a specific surface area of from 50 to 1500 m²/g, preferably from about 100 to about 900 m²/g.

Furthermore, the colloidal silica may comprise minor amounts of alkali metal silicate, such as sodium silicate. Typically, the silica to alkali metal silicate (e.g., SiO₂:Na₂O) molar ratio is at least 50:1, and preferably at least 100:1, in the colloidal silica according to the invention.

The colloidal silica of the composition according to the invention may be unmodified colloidal silica, or it may comprise various modifications, such as surface modifications. For the purpose of the present invention, a modification typically is a chemical surface modification involving the incorporation of a functional group at or near the surface of a silica particle, so as to alter the chemical and/or physical properties of the particle. For instance, the colloidal silica may comprise anionic or cationic particles. For example, anionic particles may comprise silanediol, silanetriol and/or aluminate modifications. Furthermore, the silica particles may comprise various organic surface modifications such as alkyl groups and/or derivatives thereof, preferably silane modifications, and more preferably epoxysilane modifications. A modification comprising a carbon chain of some length is particularly advantageous because the size of the chain assists in stabilising the mixture by decreasing electrostatic forces acting on the silica particle.

In embodiments of the invention, the silica compound is silicate, typically alkali metal silicate, such as sodium silicate or potassium silicate. Another example of a suitable silicate is ammonium silicate. As described above, water glass is widely used in bleaching processes because of its peroxide stabilising effect. However, the present inventors have found that, similarly to the case of colloidal silica, by pre-formulating sodium silicate and an alkaline earth metal oxide or alkaline earth metal hydroxide to form a composition according to the invention, the efficiency of the peroxide-assisted bleaching reaction may be greatly improved. Consequently, a lower amount of sodium silicate can be used to achieve the same ISO brightness and residual peroxide value compared to a process using sodium hydroxide instead of magnesium hydroxide. Thus, the invention may be used to reduce many of the disadvantages traditionally associated with excessive use of water glass, such as scaling, abrasiveness and drainage obstruction.

The sodium silicate used in the composition according to the invention is typically water glass, which is generally provided as a viscous solution having a dry content of 30-50 % by weight and a pH in the range of from about 10 to 13.

The ratio of silica to alkali metal oxide is typically in the range of from 1:1 to 3.5:1. However, according to the invention, alkali metal silicate having a ratio outside this range may also be used, for example a ratio of up to 4.5:1. Thus, for water glass, the SiO₂:Na₂O ratio may be from 1:1 to 4.5:1.

For the purpose of the invention, all amounts of colloidal silica and water glass, respectively, are indicated by weight of dry material.

The composition according to the invention typically has a dry content of about 60 % or less, usually about 40 % by weight. Furthermore, the composition typically has an alkaline pH, preferably a pH of 10 or higher. More preferably, the pH of the composition according to the invention is in the range of from 10 to 13.

In order to obtain a composition of acceptable storage stability, or to further improve the functionality of the composition, it may be desirable to include various additives in the composition according to the invention. Examples of such additives include: rheology modifiers such as thickeners including biopolymers, e.g. xanthan gum and carboxymethyl cellulose; dispersants, such as polyacrylates, polynaphtalene sulphonates and lignosulphonates; pH regulating agents, such as sodium hydroxide; preservatives; and chelating agents, all of which are known to persons skilled in the art. For example, the composition may comprise an additional chelating agent, such as a chelating agent selected from the group consisting of DTPA, EDTA, a phosphonate and any combination thereof. Any one of the above additives or groups of additives would form part of the non-solvent matter of the composition. Any optional additive may be present in the composition while the composition is allowed to stand, or an optional additive may be added to the composition after the composition has been allowed to stand.

As indicated above, the composition according to the invention may be used for treating cellulosic fibres. Examples of treatments for which the composition may be used include bleaching, oxygen delignification and deinking.

Furthermore, the composition of the invention may be used for reducing the formation of oxalate scale, such as oxalate scale formed in a pulp and/or paper making system. In particular, the invention may be used for reducing the formation of calcium oxalate deposits in a pulp and/or paper production system.

At concentrations above the water solubility of calcium oxalate, calcium ions and oxalate ions present in an aqueous phase in a pulp and/or paper making system will precipitate and form a calcium oxalate scale on surfaces in the system. In the presence of magnesium, however, precipitation can be significantly reduced or even totally eliminated since oxalate ions then may form a complex with magnesium ions rather than calcium ions. As a result of the magnesium oxalate complex having a considerably higher water solubility than the calcium oxalate complex, the rate of calcium oxalate precipitation is decreased. The invention thus enables further closing of water circuits in pulp and/or paper making processes by allowing a higher degree of accumulation of calcium ions and oxalate ions in the process water without precipitation of calcium oxalate.

The composition according to the invention may be produced by adding the alkaline earth metal oxide or alkaline earth metal hydroxide and the silica compound to an aqueous medium to form an aqueous mixture and then allowing said aqueous mixture to stand, typically for at least 1 hour.

The present inventors have found that by allowing the composition stand by its own, e.g. during storage, the activity of the composition is improved, probably due to some reactions, still to be elucidated, which occur in the composition. For example, when allowed to stand, the composition might perhaps equilibrate, or some reaction occurring within the composition might be proceeding towards an equilibrium. Not wishing to be bound by any particular theory, it is believed that dissolved iron and manganese ions originating from the alkaline earth metal oxide or alkaline earth metal hydroxide are complexed by the silica compound, and also that solid alkaline earth metal hydroxide which is reformed as a result of a dynamic equilibium between the solid and dissolved forms of alkaline earth metal hydroxide thus might contain reduced amounts of iron and manganese. Thus, it may be preferable to allow the composition according to the invention to stand for an extended period of time.

The period of time for which the composition according to the invention is required to stand is typically dependent on the type and amount of silica compound used. For example, after mixing of the ingredients, the mixture may be allowed to stand for about 1 day (24 hours) or more at ambient temperature before use to form the composition according to the invention. Typically, the mixture is allowed to stand for at least 2 days, and more typically at least 1 week at ambient temperature. However, as will be apparent to those skilled in the art, if the composition is allowed to stand under conditions which are known to favour the rate of a chemical reaction, such as increased temperature or vigorous stirring, a shorter time period may be sufficient. Thus, the time period for which the composition is allowed to stand may be at least 1 hour, for example at least 3 hours, at least 6 hours, or at least 12 hours.

Furthermore, the composition according to the invention may be used in a method for producing a treatment mixture comprising an alkaline earth metal oxide or alkaline earth metal hydroxide, a silica compound and a treatment agent. The treatment agent may be for instance a bleaching agent, other lignin reactive agent, a deinking agent, or any combination thereof. The treatment mixture may be produced by providing a composition comprising an alkaline earth metal oxide or alkaline earth metal hydroxide and a silica compound as described above and contacting said composition with the treatment agent. The composition comprising an alkaline earth metal oxide or alkaline earth metal hydroxide and a silica compound is typically allowed to stand before being contacted with the treatment agent, in order to avoid degradation of the treatment agent. Degradation may be catalysed by iron and/or manganese ions initially present in the alkaline earth metal oxide or alkaline earth metal hydroxide. In embodiments of the invention, an effective amount of the treatment agent is added to the composition after it has been allowed to stand but before addition to the material to be bleached, e.g. a fibre slurry comprising virgin cellulosic fibres, recylced fibres or a combination thereof. Thus, the treatment mixture according to the invention is typically formed shortly before it is added to the material to be treated. Alternatively, the composition may be contacted with the treatment agent during and/or after addition to the material to be treated, in which case the treatment mixture is formed during addition thereof and/or formed within the material to be treated. Contacting the composition with the treatment agent after addition to the material to be treated may be advantageous, as it allows separate addition rates and/or separate addition points for the composition and the treatment agent.

When the treatment agent is a bleaching agent, it is typically a peroxidic compound, such as hydrogen peroxide. When the treatment agent is a lignin reactive agent, it is typically oxygen or a combination of oxygen and hydrogen peroxide. Finally, when the treatment agent is a deinking agent, it may be any agent conventionally used for deinking purposes, for example a surfactant, a soap, a complexing agent such as DTPA, a calcium ion increasing agent such as calcium chloride, a bleaching agent such as hydrogen peroxide, an enzyme, or any combination thereof.

According to the invention, a method for treating cellulosic fibres comprises adding a composition according to the above description to a fibre material, e.g. an aqueous fibre suspension, and also comprises adding a treatment agent to said fibre material. The composition and the treatment agent may be added sequentially or simultaneously. When the composition comprising an alkaline earth metal oxide or alkaline earth metal hydroxide and a silica compound and the treatment agent are added sequentially to a fibre material, the composition comprising an alkaline earth metal oxide or alkaline earth metal hydroxide and a silica compound is preferably added before the addition of the treatment agent.

In the method for treating cellulosic fibres the treatment agent typically is as described above.

For the purpose of bleaching, the method comprises adding a composition according to the invention and a bleaching agent to a fibre material. For example, a treatment mixture according to the above description in which a bleaching agent is included may be used. A bleaching treatment may be performed on any type of pulp. However, a bleaching process using hydrogen peroxide is typically performed on chemical pulp.

Furthermore, the composition according to the invention may be used in a method for oxygen delignification. Traditional delignification of wood chips by contact with a harsh cooking liqour is a rather unselective process in which also cellulose fibres are degraded to some extent. Therefore, today, this step is generally interrupted at an early stage and the remainder of the delignification process is performed with a more selective lignin reactive agent, such as oxygen. Oxygen delignification bears some resemblance to bleaching in that oxygen reacts with non-cellulose material, although generally oxygen delignification does not increase the brightness of the fibres. During the oxygen delignification process, hydrogen peroxide is formed through a reaction with water in a redox cycle. Small amounts of hydrogen peroxide may also be added, for example in order to avoid alkali darkening. Irrespective of its source, hydrogen peroxide present in the process may be decomposed by iron and manganese ions originating from the wood chips or other sources. Radical species resulting from this decomposition may attack the cellulosic carbohydrates, resulting in strength loss of the delignified pulp. It is known that magnesium sulphate (also known as Epsom salt) may reduce the effect of manganese and iron induced radical decomposition of carbohydrates. However, the combination of a poorly soluble magnesium salt, such as magnesium hydroxide, in combination with silicate has so far not been used as a radical scavenger in the oxygen-based delignification process. The inventors have found that the composition according to the invention may be advantageously used together with a lignin reactive agent in a delignification step. Thus, the negative effects of iron and manganese ions on hydrogen peroxide present in the oxygen delignification process may be reduced.

A method for oxygen delignification of cellulosic fibres typically comprises adding a composition according to the invention to a fibre material and also adding a lignin reactive agent to said fibre material. For example, a treatment mixture as described above in which oxygen is included as a treatment agent may be used in a method for oxygen delignification. Oxygen delignification is typically performed on chemical pulp.

Additionally, the composition according to the invention may be used in a method for deinking of recycled fibres. Such a method typically comprises adding a composition according to the above description to a slurry of recycled fibres, and adding one or more deinking agents to said fibre slurry. For example, a treatment mixture as described above in which a deinking agent is included may be used in a method for deinking recycled fibres. The deinking agent may be a surfactant, a soap, a complexing agent such as DTPA, a calcium ion increasing agent such as calcium chloride, a bleaching agents such as hydrogen peroxide, or any other conventional deinking agent.

The cellulosic fibres may comprise any kind of cellulosic fibre material, but preferably comprises wood and/or paper pulp. The fibre material may comprise virgin fibres or recycled fibres or a combination thereof. The wood and/or paper pulp may comprise any one of chemical wood pulp, semi-chemical wood pulp, mechanical wood pulp, and recycled pulp.

The composition according to the invention may be used in a method for reducing oxalate scale formation, e.g. in a pulp and/or paper making system. In such a method the composition is added to the system to be treated, e.g. the pulp and/or paper making system. The composition is typically added to the fibre material, such as the wood chips or pulp. Thus, the method for reducing oxalate scale formation does not require the addition of any one of the treatment agents mentioned above.

Furthermore, the composition according to the invention may be used in a method for producing a paper article from cellulosic fibres, wherein the cellulosic fibres of which the paper article is to be formed are treated as described above with a composition or a treatment mixture according to the invention.

In the following, the invention will be further illustrated by means of non-limiting examples.

### Examples

In all experiments, fibre suspensions of Norwegian spruce made from a mixture of Thermo Mechanical Pulp (TMP) and Groundwood Pulp (GW) with the proportions TPM:GW = 85:15 were used as fibre material. The pulp had been pretreated with DTPA (3,5 kg 40 % DTPA per ton of fibre) in order to remove heavy metals, subsequently replacing the initial water content with water essentially free from heavy metals. The initial pulp brightness was 61,9%.

The magnesium hydroxide used was a Dead Sea Periclase magnesium hydroxide having a manganese content of <10 ppm and an iron content of <100 ppm.

Laboratory scale bleaching trials were conducted in plastic bags. The residual peroxide was determined using a standard iodometric method. Brightness measurements were performed according to SCAN standards using a Datacolor ElrephoMat DFC 5 spectrophotometer. The amounts added are based on dry weight.

### Comparative Example 1

A fibre suspension according to the above description was contacted for 120 minutes at 70 °C with 28 kg hydrogen peroxide per ton of dry fibre, 8.0 kg magnesium hydroxide per ton of dry fibre and 8.0 kg colloidal silica of dry per ton fibre. The hydrogen peroxide, the magnesium hydroxide and the colloidal silica were mixed shortly before addition to the fibre suspension. The colloidal silica was a commercial colloidal silica sol having a dry content of 30 %, a specific surface area of 360 m²/g and a mean particle diameter of 7 nm.

Results: The brightness after this bleaching (1-A) was determined to ISO brightness 71,2 %. The residual peroxide was 24,0 %.

### Example 1

A fibre suspension according to the above description was contacted for 120 minutes at 70 °C with 28 kg hydrogen peroxide per ton of dry fibre and a composition made of 8.0 kg magnesium hydroxide per ton of dry fibre and 8.0 kg colloidal silica per ton of dry fibre. The colloidal silica a commercial colloidal silica sol having a dry content of 30 %, a specific surface area of 360 m²/g and a mean particle diameter of 7 nm. The above composition was made by mixing the magnesium hydroxide and the colloidal silica and allowing the resulting mixture to stand in a sealed vessel for about 5 weeks at ambient temperature prior to contact with hydrogen peroxide and addition to the fibre suspension.

Results: The brightness after this bleaching (1-B), was determined to ISO brightness 70,6 %. The residual peroxide was 33,0 %.

### Comparative Example 2

A fibre suspension according to the above description was contacted for 120 minutes at 70 °C with 28 kg hydrogen peroxide per ton of dry fibre, 8.0 kg magnesium hydroxide per ton of dry fibre and 8.0 kg modified colloidal silica per ton of dry fibre. The hydrogen peroxide, the magnesium hydroxide and the colloidal silica were mixed shortly before addition to the fibre suspension. The modified colloidal silica was a commercial epoxy silane modified colloidal silica sol having a dry content of 30 % and a mean particle diameter of 7 mn.

Results: The brightness after this bleaching (2-A) was determined to ISO brightness 71,5 %. The residual peroxide was 27,0 %.

### Example 2

A fibre suspension according to the above description was contacted for 120 minutes at 70 °C with 28 kg hydrogen peroxide per ton of dry fibre and a composition made of 8.0 kg magnesium hydroxide per ton of dry fibre and 8.0 kg modified colloidal silica per ton of dry fibre. The modified colloidal silica was a commercial epoxy silane modified colloidal silica sol having a dry content of 30 % and a mean particle diameter of 7 nm. The above composition was made by mixing the magnesium hydroxide and the modified colloidal silica and allowing the resulting mixture to stand for about 5 weeks in a sealed vessel at ambient temperature prior to contact with the hydrogen peroxide and addition to the fibre suspension.

Results: The brightness after this bleaching (2-B) was determined to ISO brightness 70,8 %. The residual peroxide was 30,6 %.

### Comparative Example 3

A fibre suspension according to the above description was contacted for 120 minutes at 70 °C with 28 kg hydrogen peroxide per ton of dry fibre, 8.0 kg magnesium hydroxide per ton of dry fibre and 8.0 kg silicate per ton of dry fibre. The hydrogen peroxide, the magnesium hydroxide and the silicate were mixed shortly before addition to the fibre suspension. The silicate was water glass with the following specification: 39 Be' R=3.25.

Results: The brightness after this bleaching (3-A) was determined to ISO brightness 72,4 %. The residual peroxide was 35,4 %.

### Example 3

A fibre suspension according to the above description was contacted for 120 minutes at 70 °C with 28 kg hydrogen peroxide per ton of dry fibre and a composition made of 8.0 kg magnesium hydroxide per ton of dry fibre and 8.0 kg silicate per ton of dry fibre. The silicate was water glass with the following specification: 39 Be' R=3.25. The above composition was made by mixing the magnesium hydroxide and the silicate and allowing the resulting mixture to stand for approximately 5 weeks in a sealed vessel at ambient temperature prior to contact with the hydrogen peroxide and addition to the fibre suspension.

Results: The brightness after this bleaching (3-B) was determined to ISO brightness 72,2 %. The residual peroxide was 43,8 %.

### Comparative Example 4

A fibre suspension according to the above description was contacted for 120 minutes at 70 °C with 28 kg hydrogen peroxide per ton fibre, 8.0 kg magnesium hydroxide per ton fibre and 8.0 kg silicate per ton fibre. The hydrogen peroxide, the magnesium hydroxide and the silicate were mixed shortly before addition to the fibre suspension. The silicate was water glass with the following specification: 48 Be' R=2.1.

Results: The brightness after this bleaching (4-A) was determined to ISO brightness 72,2 %. The residual peroxide was 31,2 %.

### Example 4

A fibre suspension according to the above description was contacted for 120 minutes at 70 °C with 28 kg hydrogen peroxide per ton of dry fibre and a composition made of 8.0 kg magnesium hydroxide per ton of dry fibre and 8.0 kg silicate per ton of dry fibre. The silicate was water glass with the following specification: 48 Be' R=2.1. The above composition was made by mixing the magnesium hydroxide and the silicate and allowing the resulting mixture to stand for approximately 5 weeks in a sealed vessel at ambient temperature prior to contact with the hydrogen peroxide and addition to the fibre suspension.

Results: The brightness after this bleaching (4-B) was determined to ISO brightness 72,3 %. The residual peroxide was 39 %.

An overview of the experimental setup and the results is presented in Table 1 below.

**Table 1**

| Experimental setup and bleaching results | | | | | | | | |
|---|---|---|---|---|---|---|---|---|
| **Example** | **1-A** | **1-B** | **2-A** | **2-B** | **3-A** | **3-B** | **4-A** | **4-B** |
| Temperature (°C) | 70 | 70 | 70 | 70 | 70 | 70 | 70 | 70 |
| Time (min) | 120 | 120 | 120 | 120 | 120 | 120 | 120 | 120 |
| H₂O₂ (kg/ton) | 28 | 28 | 28 | 28 | 28 | 28 | 28 | 28 |
| Mg(OH)₂ (kg/ton) | 8 | 8 | 8 | 8 | 8 | 8 | 8 | 8 |
| Silica compound (kg/ton) | 8 | 8 | 8 | 8 | 8 | 8 | 8 | 8 |
| Type of silica compound | CS | CS | MCS | MCS | WGL | WGL | WGL | WGL |
| SiO₂:Na₂O ratio | >100 | >100 | >100 | >100 | 3,25 | 3,25 | 2,1 | 2,1 |
| Exp. according to the invention | No | Yes | No | Yes | No | Yes | No | Yes |
| Brightness ISO (%) after bleaching | 71,2 | 70,6 | 71,5 | 70,8 | 72,4 | 72,2 | 72,2 | 72,3 |
| Residual H₂O₂ (%) | 24,0 | 33,0 | 27,0 | 30,6 | 35,4 | 43,8 | 31,2 | 39,0 |
| Absolute increase in residual H₂O₂ achieved by the invention (%) | | 9,0 | | 3,6 | | 8,4 | | 7,8 |
| Relative increase in residual H₂O₂ achieved by the invention (%) | | 38 | | 13 | | 24 | | 25 |

| | | | | | | | | |
|---|---|---|---|---|---|---|---|---|
| (WGL=water glass, CS=colloidal silica, MCS=modified colloidal silica). | | | | | | | | |

The results clearly show that a composition of magnesium hydroxide and silica (in the form of any one of colloidal silica, modified colloidal silica or water glass) which has been allowed to stand according to the invention provides a notable increase in residual peroxide. The ISO brigthess is unaffected in the experiments using water glass, and a minor decrease is seen in the experiments using colloidal silica.

## Claims

1. A method for producing a composition comprising a mixture of a silica compound and an alkaline earth metal oxide or alkaline earth metal hydroxide in an aqueous solvent, comprising the steps of:
- adding an alkaline earth metal oxide or alkaline earth metal hydroxide and a silica compound selected from the group consisting of colloidal silica and a silicate which is alkali metal silicate or ammonium silicate, to an aqueous medium to form an aqueous mixture, wherein the silica compound and the alkaline earth metal oxide or alkaline earth metal hydroxide together form the major part of the non-solvent matter of the composition; and
- allowing said aqueous mixture to stand by maintaining the mixture in a sealed or open vessel, with or without agitation, for at least 24 hours at ambient temperature, during which time period the composition is not contacted with any other chemicals.

2. A method according to claim 1, wherein said aqueous mixture is allowed to stand for at least 1 week.

3. A method according to claim 1 or 2, **characterised in that** the composition has a content of said alkaline earth metal oxide or alkaline earth metal hydroxide in the range of from 1 to 99 %, preferably 10 to 90 %, more preferably 30 to 80 %, and most preferably 40 to 70 %, based on the dry weight of the composition.

4. A method according to any one of the claims 1 to 3, **characterised in that** the composition has a content of said silica compound in the range of from 1 to 80 %, preferably 5 to 50 %, based on the dry weight of the composition.

5. A method according to any one of the preceding claims, **characterised in that** the composition has a dry weight ratio of said silica compound to said alkaline earth metal oxide or alkaline earth metal hydroxide in the range of from 1:99 to 80:20, preferably from 5:95 to 50:50, and more preferably from 20:80 to 40:60.

6. A method according to any one of the preceding claims, wherein said alkaline earth metal is magnesium.

7. A method according to any one of the preceding claims, wherein said silica compound is colloidal silica.

8. A method according to claim 7, wherein said colloidal silica comprises surface modifications.

9. A method according to claim 8, wherein said surface modifications comprise organic compounds.

10. A method according to any one of the claims 7 to 9, wherein said colloidal silica has a particle size in the range of from 1 to 500 nm.

11. A method according any one of the claims 1 to 6, wherein said alkali metal silicate is sodium silicate.

12. A method according to any one of claims 1-6 or claim 11, wherein said alkali metal silicate has a SiO₂ to alkali metal oxide ratio in the range of from 1 to 4.5.

13. A composition obtainable by the method according to any one of the claims 1 to 12.

14. A composition according to claim 13, which has an alkaline pH.

15. Use of a composition according to claim 13 for treating cellulosic fibres.

16. Use of a composition according to claim 13 for reducing oxalate scale formation in a pulp and/or paper making system.

17. A method for producing a treatment mixture, comprising the steps of:
- providing a composition according to claim 13; and
- contacting said composition with a treatment agent.

18. A method for treating cellulosic fibres comprising the steps of
- providing a fibre material;
- adding a composition according to claim 13 to said fibre material; and
- adding a treatment agent to said fibre material.

19. A method according to claim 18, wherein the step of adding said composition is performed before the step of adding said treatment agent.

20. A method according to any one of the claims 17, 18 and 19, wherein said treatment agent is a lignin reactive agent.

21. A method according to any one of the claims 17 to 20, wherein said treatment agent is a bleaching agent.

22. A method according to any one of the claims 17 to 21, wherein said treatment agent is hydrogen peroxide.

23. A method according to any one of the claims 17 to 20, wherein said treatment agent is oxygen.

24. A method according to any one of the claims 17, 18 or 19, wherein said treatment agent is a deinking agent.

25. A method for reducing formation of oxalate scale in a pulp and/or paper making system, comprising the step of adding a composition according to claim 13 to said pulp and/or paper making system.

26. A method according to any one of the claims 18 to 25, wherein said fibre material comprises chemical wood pulp.

27. A method accoring to any one of the claims 18 to 25, wherein said fibre material comprises semi-chemical wood pulp.

28. A method accoring to any one of the claims 18 to 25, wherein said fibre material comprises mechanical wood pulp.

29. A method accoring to any one of the claims 18 to 25, wherein said fibre material comprises recycled fibres.

30. A method for producing a paper article comprising the steps of:
- performing a method for treating cellulosic fibres according to any one of the claims 18 to 29; and
- forming a paper article from said cellulosic fibres.

## Patentansprüche

1. Verfahren zur Herstellung einer Zusammensetzung, die ein Gemisch aus einer Siliziumdioxidverbindung und einem Erdalkalimetalloxid oder Erdalkalimetallhydroxid in einem wässrigen Lösungsmittel umfasst, wobei dieses Verfahren die folgenden Schritte umfasst:
- Zugabe eines Erdalkalimetalloxids oder Erdalkalimetallhydroxids und einer Siliziumdioxidverbindung gewählt aus der Gruppe bestehend aus kolloidalem Siliziumdioxid und einem Silikat, das Alkalimetallsilikat oder Ammoniumsilikat ist, zu einem wässrigen Medium zur Ausbildung eines wässrigen Gemischs, wobei die Siliziumdioxidverbindung und das Erdalkalimetalloxid oder Erdalkalimetallhydroxid gemeinsam den Hauptteil der nichtlösenden Substanz der Zusammensetzung bilden;
und
- Stehenlassen des wässrigen Gemischs durch Haltung des Gemischs in einem versiegelten oder offenen Gefäß, mit oder ohne Rühren, über mindestens 24 Stunden bei Umgebungstemperatur, wobei die Zusammensetzung während dieser Zeit nicht mit anderen Chemikalien in Kontakt tritt.

2. Verfahren nach Anspruch 1, wobei dieses wässrige Gemisch mindestens 1 Woche lang stehen gelassen wird.

3. Verfahren nach Anspruch 1 oder 2, **dadurch gekennzeichnet, dass** die Zusammensetzung einen Gehalt an diesem Erdalkalimetalloxid oder Erdalkalimetallhydroxid im Bereich von 1 bis 99 %, bevorzugt von 10 bis 90 %, noch bevorzugter von 30 bis 80 % und höchst bevorzugt von 40 bis 70 % in Bezug auf das Trockengewicht der Zusammensetzung aufweist.

4. Verfahren nach einem der Ansprüche 1 bis 3, **dadurch gekennzeichnet, dass** die Zusammensetzung einen Gehalt an diesen Siliziumdioxidverbindungen im Bereich von 1 bis 80 %, bevorzugt 5 bis 50 % in Bezug auf das Trockengewicht der Zusammensetzung aufweist.

5. Verfahren nach einem der vorhergehenden Ansprüche, **dadurch gekennzeichnet, dass** die Zusammensetzung ein Trockengewichtsverhältnis der Siliziumdioxidverbindung zum Erdalkalimetalloxid oder Erdalkalimetallhydroxid im Bereich von 1:99 bis 80:20, bevorzugt von 5:95 bis 50:50 und noch bevorzugter von 20:80 bis 40:60 aufweist.

6. Verfahren nach einem der vorhergehenden Ansprüche, wobei dieses Erdalkalimetall Magnesium ist.

7. Verfahren nach einem der vorhergehenden Ansprüche, wobei diese Siliziumdioxidverbindung kolloidales Siliziumdioxid ist.

8. Verfahren nach Anspruch 7, wobei dieses kolloidale Siliziumdioxid Oberflächenmodifikationen umfasst.

9. Verfahren nach Anspruch 8, wobei diese Oberflächenmodifikationen organische Verbindungen umfassen.

10. Verfahren nach einem der Ansprüche 7 bis 9, wobei dieses kolloidale Silizium eine Teilchengröße im Bereich von 1 bis 500 nm aufweist.

11. Verfahren nach einem der Ansprüche 1 bis 6, wobei dieses Alkalimetallsilikat Natriumsilikat ist.

12. Verfahren nach einem der Ansprüche 1 bis 6 oder Anspruch 11, wobei dieses Alkalimetallsilikat ein SiO₂/Alkalimetalloxid-Verhältnis im Bereich von 1 bis 4,5 aufweist.

13. Zusammensetzung, die durch das Verfahren nach einem der Ansprüche 1 bis 12 erhältlich ist.

14. Zusammensetzung nach Anspruch 13 mit einem alkalischen pH-Wert.

15. Verwendung einer Zusammensetzung nach Anspruch 13 zur Behandlung von Cellulosefasern.

16. Verwendung einer Zusammensetzung nach Anspruch 13 zur Reduzierung der Bildung von Oxalatbelägen in einem Faserstoff- und/oder Papierherstellungssystem.

17. Verfahren zur Herstellung eines Behandlungsgemischs, umfassend die Schritte:
- Bereitstellung einer Zusammensetzung nach Anspruch 13; und
- Inkontaktbringen dieser Zusammensetzung mit einem Behandlungsmittel.

18. Verfahren zur Behandlung von Cellulosefasern, umfassend die Schritte:
- Bereitstellung eines Fasermaterials;
- Zugabe einer Zusammensetzung nach Anspruch 13 zu diesem Fasermaterial; und
- Zugabe eines Behandlungsmittels zu diesem Fasermaterial.

19. Verfahren nach Anspruch 18, wobei der Schritt der Zugabe der Zusammensetzung vor dem Schritt der Zugabe des Behandlungsmittels durchgeführt wird.

20. Verfahren nach einem der Ansprüche 17, 18 und 19, wobei dieses Behandlungsmittel ein ligninreaktives Mittel ist.

21. Verfahren nach einem der Ansprüche 17 bis 20, wobei dieses Behandlungsmittel ein Bleichmittel ist.

22. Verfahren nach einem der Ansprüche 17 bis 21, wobei dieses Behandlungsmittel Wasserstoffperoxid ist.

23. Verfahren nach einem der Ansprüche 17 bis 20, wobei dieses Behandlungsmittel Sauerstoff ist.

24. Verfahren nach einem der Ansprüche 17, 18 oder 19, wobei dieses Behandlungsmittel ein Deinkingmittel ist.

25. Verfahren zur Reduzierung der Bildung von Oxalatbelägen in einem Faserstoff- und/oder Papierherstellungssystem, umfassend den Schritt der Zugabe einer Zusammensetzung nach Anspruch 13 zu diesem Faserstoff- und /oder Papierherstellungssystem.

26. Verfahren nach einem der Ansprüche 18 bis 25, wobei dieses Fasermaterial chemisch aufgeschlossene Holzfasern umfasst.

27. Verfahren nach einem der Ansprüche 18 bis 25, wobei dieses Fasermaterial halbchemisch aufgeschlossene Holzfasern umfasst.

28. Verfahren nach einem der Ansprüche 18 bis 25, wobei dieses Fasermaterial mechanisch aufgeschlossene Holzfasern umfasst.

29. Verfahren nach einem der Ansprüche 18 bis 25, wobei dieses Fasermaterial Recyclingfasern umfasst.

30. Verfahren zur Herstellung eines Papierartikels, umfassend die Schritte:
- Durchführung eines Verfahrens zur Behandlung von Cellulosefasern nach einem der Ansprüche 18 bis 29; und
- Bildung eines Papierartikels aus diesen Cellulosefasern.

## Revendications

1. Méthode de production d'une composition comprenant un mélange d'un composé à base de silice et d'un oxyde de métal alcalino-terreux ou d'un hydroxyde de métal alcalino-terreux dans un solvant aqueux, comprenant les étapes consistant à :
- ajouter un oxyde de métal alcalino-terreux ou un hydroxyde de métal alcalino-terreux et un composé à base de silice choisi dans le groupe constitué par la silice colloïdale et un silicate qui est un silicate de métal alcalin ou un silicate d'ammonium, à un milieu aqueux pour former un mélange aqueux, où le composé à base de silice et l'oxyde de métal alcalino-terreux ou l'hydroxyde de métal alcalino-terreux forment ensemble la majeure partie de la matière hors solvant de la composition, et
- permettre audit mélange aqueux de reposer en maintenant le mélange dans un récipient scellé ou ouvert, avec ou sans agitation, pendant au moins 24 heures à température ambiante, période pendant laquelle la composition n'est pas mise en contact avec d'autres substances chimiques quelconques.

2. Méthode selon la revendication 1, **caractérisée en ce qu'**on laisse reposer ledit mélange aqueux pendant au moins 1 semaine.

3. Méthode selon la revendication 1 ou 2, **caractérisée en ce que** la composition possède une teneur en ledit oxyde de métal alcalino-terreux ou hydroxyde de métal alcalino-terreux dans la plage allant de 1 à 99%, préférablement de 10 à 90%, plus préférablement de 30 à 80%, et tout préférablement de 40 à 70%, sur la base du poids sec de la composition.

4. Méthode selon l'une quelconque des revendications 1 à 3, **caractérisée en ce que** la composition possède une teneur en ledit composé à base de silice dans la plage allant de 1 à 80%, préférablement de 5 à 50%, sur la base du poids sec de la composition.

5. Méthode selon l'une quelconque des revendications précédentes, **caractérisée en ce que** la composition possède un rapport de poids sec dudit composé à base de silice audit oxyde de métal alcalino-terreux ou hydroxyde de métal alcalino-terreux dans la plage allant de 1:99 à 80:20, préférablement de 5:95 à 50:50 et plus préférablement de 20:80 à 40:60.

6. Méthode selon l'une quelconque des revendications précédentes, **caractérisée en ce que** ledit métal alcalino-terreux est le magnésium.

7. Méthode selon l'une quelconque des revendications précédentes, **caractérisée en ce que** ledit composé à base de silice est la silice colloïdale.

8. Méthode selon la revendication 7, **caractérisée en ce que** ladite silice colloïdale comprend des modifications de surface.

9. Méthode selon la revendication 8, **caractérisée en ce que** lesdites modifications de surface comprennent des composés organiques.

10. Méthode selon l'une quelconque des revendications 7 à 9, **caractérisée en ce que** ladite silice colloïdale possède une taille de particules dans la plage allant de 1 à 500 nm.

11. Méthode selon l'une quelconque des revendications 1 à 6, **caractérisée en ce que** ledit silicate de métal alcalin est le silicate de sodium.

12. Méthode selon l'une quelconque des revendications 1 à 6 ou la revendication 11, **caractérisée en ce que** ledit silicate de métal alcalin possède un rapport de SiO₂ à l'oxyde de métal alcalin dans la plage allant de 1 à 4,5.

13. Composition pouvant être obtenue par la méthode selon l'une quelconque des revendications 1 à 12.

14. Composition selon la revendication 13, possédant un pH alcalin.

15. Utilisation d'une composition selon la revendication 13, pour le traitement de fibres cellulosiques.

16. Utilisation d'une composition selon la revendication 13, pour la réduction de la formation d'incrustations d'oxalate dans un système de pâte à papier et/ou de fabrication de papier.

17. Méthode de production d'un mélange de traitement, comprenant les étapes consistant à :
- fournir une composition selon la revendication 13 ; et
- mettre en contact ladite composition avec un agent de traitement.

18. Méthode de traitement de fibres cellulosiques, comprenant les étapes consistant à :
- fournir un matériau de fibres ;
- ajouter une composition selon la revendication 13 audit matériau de fibres ; et
- ajouter un agent de traitement audit matériau de fibres.

19. Méthode selon la revendication 18, **caractérisée en ce que** l'étape d'addition de ladite composition est effectuée avant l'étape d'addition dudit agent de traitement.

20. Méthode selon l'une quelconque des revendications 17, 18 ou 19, **caractérisée en ce que** ledit agent de traitement est un agent réactif avec la lignine.

21. Méthode selon l'une quelconque des revendications 17 à 20, **caractérisée en ce que** ledit agent de traitement est un agent de blanchiment.

22. Méthode selon l'une quelconque des revendications 17 à 21, **caractérisée en ce que** ledit agent de traitement est le peroxyde d'hydrogène.

23. Méthode selon l'une quelconque des revendications 17 à 20, **caractérisée en ce que** ledit agent de traitement est l'oxygène.

24. Méthode selon l'une quelconque des revendications 17, 18 ou 19, **caractérisée en ce que** ledit agent de traitement est un agent de désencrage.

25. Méthode de réduction de la formation d'incrustations d'oxalate dans un système de fabrication de pâte à papier et/ou de papier, comprenant l'étape d'addition d'une composition selon la revendication 13 audit système de fabrication de pâte à papier et/ou de papier.

26. Méthode selon l'une quelconque des revendications 18 à 25, **caractérisée en ce que** ledit matériau de fibres comprend de la pâte de bois chimique.

27. Méthode selon l'une quelconque des revendications 18 à 25, **caractérisée en ce que** ledit matériau de fibres comprend de la pâte de bois semi-chimique.

28. Méthode selon l'une quelconque des revendications 18 à 25, **caractérisée en ce que** ledit matériau de fibres comprend de la pâte de bois mécanique.

29. Méthode selon l'une quelconque des revendications 18 à 25, **caractérisée en ce que** ledit matériau de fibres comprend des fibres recyclées.

30. Méthode de production d'un article en papier, comprenant les étapes consistant à :
- mettre en oeuvre une méthode de traitement de fibres cellulosiques selon l'une quelconque des revendications 18 à 29 ; et
- former un article en papier à partir desdites fibres cellulosiques.
